# EUROPEAN PATENT APPLICATION

(11) **EP 4 632 261 A1**
(43) Date of publication of application: **15.10.2025**
(21) Application number: 24168963.7
(22) Date of filing: 08.04.2024
(51) Int. Cl.: F16L 59/02, E03B 7/00, F16L 59/065, F24D 3/10

(54) **RISER SYSTEM FOR PROVIDING HEAT AND WATER IN BUILDINGS**

(71) Applicant: Uponor Innovation AB, 737 61 Virsbo (SE)
(72) Inventor: Roseen, Patrik, 737 61 Virsbo (SE); Juurinen, Tero, 15560 Nastola (FI); Holmström, Robin, 737 61 Virsbo (SE); Rydholm, Joakim, 737 61 Virsbo (SE)
(74) Representative: Fenner, Seraina

(57) **Abstract**

The present invention relates to a riser system (1) for providing heat and/or water in buildings, comprising one or more pipes (2), wherein the pipes are selected from the group consisting of pipe for carrying cold drinking water, pipe for carrying hot drinking water, pipe for carrying hot heating fluid, pipe for carrying return heating fluid, and a combination thereof, wherein each pipe (2) is insulated by one or more VIPs (3, 4) wrapped around the pipe (2), forming one or more VIP-segments.

## Description

The present invention relates to a riser system for providing heat and water in buildings.

In modern buildings, riser systems serve to vertically connect the heat and water supply systems in different floors of a building. The pipes comprised in the riser system are usually insulated by using rockwool having a thickness of about 80 mm.

The object of the present invention is to provide an improved riser system.

This object is achieved by providing a riser system according to claim 1. Preferred embodiments are set forth in the dependent claims.

The riser system for providing heat and water in buildings according to the present invention comprises at least two pipes, wherein the pipes are selected from the group consisting of pipe for carrying cold drinking water, pipe for carrying hot drinking water, pipe for carrying hot heating fluid, pipe for carrying return heating fluid, and a combination thereof, wherein each pipe is insulated by one or more vacuum insulation panels (VIPs) wrapped around the pipe, forming one or more VIP-segments.

By using the riser system according to the present invention, the insulation compared to conventional 80 mm Rockwool (or equivalent) insulation is improved, while making the required diameter much smaller (e.g., 80 mm Rockwool is replaced by 8mm VIP). This enables an easier installation. Further, the available space on each floor is enlarged because less space is required for the riser system.

Moreover, by using the riser system according to the present invention, the risk of legionella growth, which can occur at temperatures from 25 to 46°C, can be essentially eliminated. More specifically, it is possible to maintain the temperature in the pipes carrying cold water well below 25°C, and it is possible to maintain the temperature in the pipes carrying hot water well above 46°C, i.e. typically at 55 to 60°C.

According to the present invention, the vacuum insulation panels comprise an envelope and a core. The core comprises insulating materials or inert fillers and is completely encapsulated by the envelope. The envelope has maximum impermeability to gases and is very substantially evacuated. The material for the envelope has very low gas diffusion values so that once the vacuum has been applied it is retained for the maximum time.

The width of the VIPs is preferably about the same as the pipe circumference, so that one VIP surrounds the pipe. For example, the width can be 300-1300mm. There can be a gap between the ends of each VIP surrounding the pipe, but preferably each VIP overlaps at its ends surrounding the pipe or more preferably there is no gap between the ends.

According to the present invention, the vacuum insulation panels are preferably joined at their ends surrounding the pipe. By doing so, sturdier VIP-segments can be formed. The jointing of the vacuum insulation panels may be done by securing the seams of the vacuum insulation panels together, preferably by using a method selected from the group consisting of sewing, gluing, laminating, or taping and a combination thereof. Preferably, adjacent VIP-segments are also joined, preferably by taping. Thus, the insulated pipes can be easier handled during mounting procedures.

Preferably, the envelope of the vacuum insulation panel comprises one or more layers, preferably multiple layers, each comprising, preferably consisting of, a material selected from the group consisting of metallized foil, polyester, polyamide, ethylene-vinyl alcohol-copolymer (EVA-copolymer) and a combination thereof, preferably metallized foil. It is noted that aluminum foil contains -for the same area, 21 times more aluminum compared to metallized film. In addition, aluminum possesses a high heat conductivity. Thus, one would expect more heat bridges in the VIP comprising aluminum foil compared to the VIP comprising metallized foil, resulting in a lower lambda value of the VIP. Therefore, the metallized foil is preferred in view of the heat conductivity. Ethylene-vinyl alcohol-copolymer layers are preferred in view of the aging characteristics. Alternatively, a hybrid of one metallized part and one aluminum foil can be used. In this case, the foil is used on the inside where the temperature is the highest. Since aluminum foil is more gas tight compared to metalized, better long-term properties at very high temperatures result.

Preferably, the core of the vacuum insulation panel comprises a material selected from the group consisting of a powdery material, such as powder of inorganic oxides, prepressed silica, and a combination thereof. Processes for producing VIPs having a core comprising powdery material are known, for example, from WO 2014/183814 A1.

Preferably, the core of the vacuum insulation panel comprises inorganic oxides in the form of a powder, preferably silica powder, more preferably fumed silica powder. Such a powder of inorganic oxides is preferred because it improves the flexibility of the VIP, particularly in comparison to prepressed silica. Flexibility is beneficial for the manufacturing, not the application. During manufacturing one can consider both wrapping of flat panels (flexibility important) or mounting in pressed silica panels (stiff - see image below - two "half-circles" that will be assembled around the pipe. The latter option is preferred for the shorter segments. Alternatively, the VIPs are mounted at the building site, and not have them pre-assembled to the pipe.

Silica is preferred as it is more resistant to ageing (i.e., a pressure increase due to the in-diffusion of gasses increases the lambda at a slower rate for the silica powder due to its nanostructure). In addition, silica has a small pore size and thus is not as pressure sensitive as, for example, glass fiber. Therefore, silica is suitable for long term applications, especially at elevated temperatures, when the diffusion is more rapid. Fumed silica, also known as pyrogenic silica, because it is produced in a flame, consists of microscopic droplets of amorphous silica fused into branched, chainlike, three-dimensional secondary particles which then agglomerate into tertiary particles. The resulting powder has an extremely low bulk density and high surface area. Fumed silica is made from flame pyrolysis of silicon tetrachloride or from quartz sand vaporized in a 3000 °C electric arc. Major global producers are Evonik (Aerosil^{®}), Cabot Corporation (Cab-O-Sil^{®}), Wacker Chemie (HDK^{®}), Dow Corning, and OCI (Konasil^{®}). Fumed silica is particularly preferred because VIPs comprising fumed silica degrade about 100 times slower than glass fiber panels and are therefore preferable for elevated temperature applications. For example, the core of the VIP can comprise fumed silica, IR opacifiers, and a small number of organic fibers. The core material is preferably non-combustible. It is preferably sealed in a high gas barrier film and an extra glass fibre textile for mechanical shock protection.

Preferably the pipes are selected from the group consisting of single layer plastic pipes, multilayer plastic pipes, and multilayer composite pipes, the multilayer composite pipes comprising one or more plastic layers and a metal layer, wherein the plastic layer in the pipes preferably comprises, more preferably consists of, a polymer, more preferably a cross-linked or non-cross-linked polyolefin, preferably selected from the group consisting of polyethylene (PE), preferably PE-RT (Polyethylene of Raised Temperature resistance), polyethylene of high density (HDPE), polypropylene, polybutylene (PB), chlorinated polyvinyl chloride (cPVC), cross-linked polyethylene (PEX), and mixtures thereof, and wherein the metal layer in the multilayer composite pipes preferably comprises a layer selected from the group consisting of an aluminum layer, a stainless steel layer, and a combination thereof. If a stainless steel layer is used in the multilayer composite pipes, the stainless steel layer is preferably the central layer facing the fluid carried through the pipe. If using an aluminum layer, the aluminum layer is preferably used as an anti-diffusion layer not facing the fluid carried through the pipe but situated between plastic layers.

Preferably, the one or more VIP-segments are movable along the length of the pipe. This makes it easier to adjust the length of the pipe without the need of cutting the VIP. Cutting the VIP would lead to a loss of vacuum and thus to a degradation of the insulation properties. In addition, the contents of the core would spoil the surroundings.

Preferably, the riser system comprises longer VIP-segments having a length of more than 0.5 to 2m and shorter VIP-segments having a length of 0.1 to 0.5m, more preferably comprising two longer segments each having a length of 1m and one or more, preferably two, shorter segments having a length of 0.1 to 0.5m. The longer VIP-segments are preferably arranged in the middle of the pipe and the shorter VIP-segments are arranged next to the longer VIP-segments toward the ends of the pipe. Preferably, at least the shorter segments are movable along the length of the pipe. This can be achieved by making them looser than the longer VIP-segments. Thus, they can be easily substituted by VIP-segments having a different length, thus enabling to adjust the total length of the VIP-segments.

Preferably, the pipes have a length of 3.0 to 3.5m. Thus, they are long enough to connect the floors of a building.

Preferably, the VIP-segments are attached to each other, preferably by taping the VIP-segments together.

Preferably, an external protective layer is placed on the outside of the VIP, the external protection layer preferably having a thickness of less than 1mm. Alternatively, the VIP is protected by a strong outer layer, or an external pipe.

The strong outer layer may be an envelope of strong material or a foam on the outside.

Preferably, the riser system further comprises clams and/or fittings that are insulated by using VIP. Thus, heat bridges can be avoided.

Preferably, the VIP has a thickness of 5 to 15mm, more preferably 5 to 10mm.

The U-value of the riser system is preferably below 0.3 W/(m²K), more preferably below 0.25 W/(m²K), in particular below 0.16 W/(m²K).

In the Figures:
- Fig. 1: shows a riser system according to the present invention
- Fig. 2: shows an insulated pipe comprised in the riser system
- Fig. 3: shows a VIP-panel having a protective layer
- Fig. 4: shows a clamp insulated by a VIP

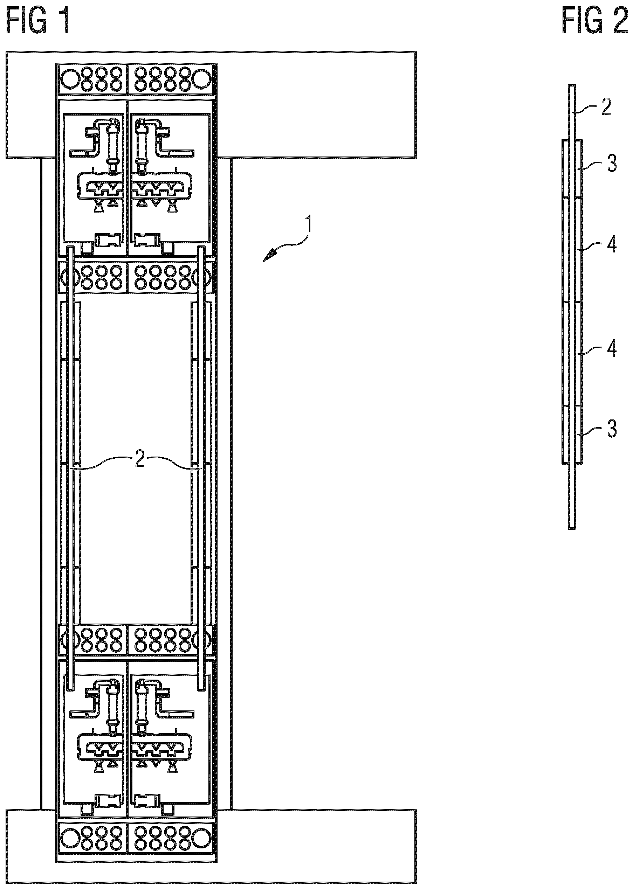

Fig. 1 shows a riser system (1) comprising two insulated pipes (2). The riser system connects the water and/or heat supply between different floors in a building. In Fig. 1, only the water supply is shown. One pipe carries hot water, while the other pipe carries cold water.

For supplying heat, at least two further pipes would be necessary, i.e. one pipe for carrying hot fluid (typically water) and a return pipe. These pipes are like the pipes for supplying hot and cold water and therefore omitted in the Figure.

Fig. 2 shows a pipe (2) comprised in the riser system (1). The pipe (1) comprises two shorter VIP-segments (3) and two longer VIP-segments (4). The shorter VIP-segment provides a loose insulation that makes it easier to replace the shorter VIP-segment. Thus, the shorter VIP-segment can be easily replace by a still shorter or longer segment, enabling to adjust the length of the insulation.

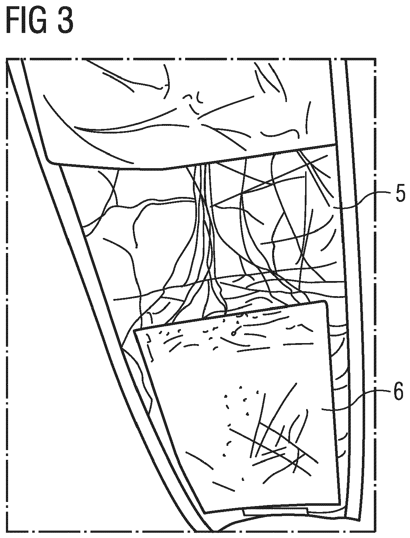

Fig. 3 shows a VIP (5) having an external protective layer (6) .

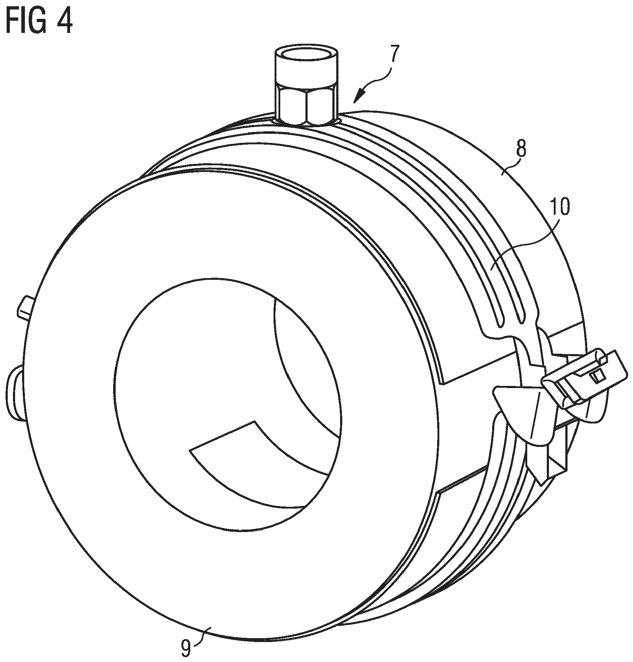

Fig. 4 shows a clamp (7) that is insulated by a VIP. More specifically, clamp (7) comprises a central polymer foam (9) for contacting and protecting the pipe (2). A VIP (8) is wrapped around the polymer foam (9). Clamp (7) further comprises an integral fastener situated above the VIP (8) and encircling the polymer foam (9) and the VIP (8).

Alternatively, it is possible to have one VIP panel facing the pipe, a protective sheet outside the VIP panel encircling the VIP , and outside the protective sheet an integral fastener.

Clamp (7) can be used as a riser clamp. Such a clamp is used by mechanical building trades for pipe support in vertical runs of piping (risers) at each floor level. The devices are placed around the pipe, and integral fasteners are then tightened to clamp them onto the pipe. The friction between the pipe and riser clamp transfers the weight of the pipe through the riser clamp to the building structure. Risers are generally located at floor penetrations, particularly for continuous floor slabs such as concrete. They may also be located at some other interval as dictated by local building codes or at intermediate intervals to support plumbing which has been altered or repaired. Heavier piping types, such as cast iron, require more frequent support. Ordinarily, riser clamps are made of carbon steel and individually sized to fit certain pipe sizes.

In the following the results of a simulation of four different riser systems comprising pipes with a diameter of 25mm, 32mm, 40mm, and 50mm, respectively, are shown. The pipes were insulated by a VIP, wherein the VIP has a thickness of 6mm, 7mm, 8mm, respectively. The calculations were based on VIPs comprising a hybrid envelope (metallized on one side and aluminum foil on the other), if full metalized envelopes would be used the U-values would be even lower. In comparison, a riser system being equal but wherein the pipes were insulated by rockwool having a thickness of 60mm or 80mm was simulated.

**Table 1: Comparison Riser system according to the present invention comprising insulation by VIP with riser system comprising rockwool insulation**

| | U-value [W/ (m²K)] | | | | Reference U-value [W/ (m²K) ] | |
|---|---|---|---|---|---|---|
| | VIP-thickness | | | | Rockwool thickness | |
| Riser Pipe diameter [mm] | 6mm | 7mm | 8mm | | 60mm | 80mm |
| 25 | 0.139 | 0.120 | 0.106 | | 0.131 | 0.115 |
| 32 | 0.158 | 0.137 | 0.120 | | 0.147 | 0.128 |
| 40 | 0.177 | 0.153 | 0.135 | | 0.165 | 0.143 |
| 50 | 0.204 | 0.176 | 0.154 | | 0.187 | 0.160 |

Table 1 shows that all simulated riser systems according to the present invention show U-values of less than 0.2 W/(m²K). Riser systems comprising VIPs having a thickness of 8mm have a lower, i.e., better, U-value than riser systems insulated with rockwool having a thickness of 80mm.

## Claims

1. Riser system for providing heat and water in buildings, comprising one or more pipes, wherein the pipes are selected from the group consisting of pipe for carrying cold drinking water, pipe for carrying hot drinking water, pipe for carrying hot heating fluid, pipe for carrying return heating fluid, and a combination thereof, wherein each pipe is insulated by one or more VIPs wrapped around the pipe, forming one or more VIP-segments.

2. Riser system according to claim 1, wherein the pipes are selected from the group consisting of single layer plastic pipes, multilayer plastic pipes, and multilayer composite pipes, the multilayer composite pipes comprising one or more plastic layers and a metal layer, wherein the plastic layer in the pipes preferably comprises, more preferably consists of, a polymer, more preferably a cross-linked or non-cross-linked polyolefin, preferably selected from the group consisting of polyethylene (PE), preferably PE-RT (Polyethylene of Raised Temperature resistance), polyethylene of high density (HDPE), polypropylene, polybutylene (PB), chlorinated polyvinyl chloride (cPVC), cross-linked polyethylene (PEX), and mixtures thereof, and wherein the metal layer in the multilayer composite pipes preferably comprises a layer selected from the group consisting of an aluminum layer, stainless steel layer, and a combination thereof.

3. Riser system according to any of the preceding claims, wherein the one or more VIP-segments are movable along the length of the pipe.

4. Riser system according to any of the preceding claims, comprising longer segments having a length of more than 0.5 to 2m and shorter segments having a length of 0.1 to 0.5m, more preferably comprising two longer segments each having a length of 1m and one or more, preferably two, shorter segments having a length of 0.1 to 0.5m.

5. Riser system according to any of the preceding claims, wherein the pipes have a length of 3.0 to 3.5m.

6. Riser system according to any of the preceding claims, wherein the VIP-segments are attached to each other, preferably by taping the VIP-segments together.

7. Riser system according to any of the preceding claims, wherein an external protective layer is placed on the outside of the VIP, the external protection layer preferably having a thickness of less than 1mm or the VIP is protected by a strong outer layer or an external pipe.

8. Riser system according to any of the preceding claims, wherein the riser system further comprises one or more clamps and/or fittings insulated by using VIPs.

9. Riser system according to any of the preceding claims, wherein the VIP has a thickness of 5 to 15mm, preferably 5 to 10mm.

10. Riser system according to any of the preceding claims, wherein the riser system has a U-value of preferably below 0.3 W/(m²K), more preferably below 0.25 W/(m²K), in particular below 0.16 W/(m²K).
